# EUROPEAN PATENT APPLICATION

(11) **EP 2 792 330 A1**
(43) Date of publication of application: **22.10.2014**
(21) Application number: 12857073.6
(22) Date of filing: 14.12.2012
(51) Int. Cl.: A61C 7/14, A61C 7/08

(54) **VIBRATION IMPARTING DEVICE FOR DENTAL USE**

(30) Priority: 16.12.2011 JP 2011275902; 03.07.2012 JP 2012149822
(71) Applicant: Panasonic Healthcare Co., Ltd., Ehime 791-0395 (JP)
(72) Inventor: SAKIMURA, Takumi, Chuo-ku, Osaka 540-6207 (JP); SUZUKI, Yusuke, Chuo-ku, Osaka 540-6207 (JP); TAIRA, Keisuke, Chuo-ku, Osaka 540-6207 (JP); FUKUSHIMA, Shogo, Chuo-ku, Osaka 540-6207 (JP); YAMAMOTO, Teruko, Sendai-shi, Miyagi 980-8577 (JP)
(74) Representative: Müller-Boré & Partner Patentanwälte PartG mbB
(86) International application number: PCT/JP2012/008027
(87) International publication number: WO 2013/088742

(57) **Abstract**

A vibrating dental device (3) vibrates a specific tooth (1a) in a dentition (1) attached with a bracket (5), a wire (6) or a mouthpiece (108) as an orthodontic appliance (2). The vibrating dental device (3) includes a vibration source (10A), a connector (12A) connected to the orthodontic appliance (2), and a vibration transmitter (11A), which transmits vibration generated by the vibration source (10A) to the connector (12A). The connector (12A) is detachably attached to the orthodontic appliance (2).

## Description

### Technical Field

The present invention relates to a vibrating dental device.

### Background Art

Orthodontic treatment is treatment for moving teeth by giving continuous force (orthodontic force) to the teeth to improve teeth alignment.

A multiple bracket device or an orthodontic mouthpiece type aligner is used as a conventional orthodontic treatment device. These are devices configured to give a continuous force to the teeth by a returning force of a bent wire or a deformed polymer elastomer.

However, it is necessary in the orthodontic treatment using the continuous force to always attach an orthodontic treatment device to a dentition during a treatment period which lasts for several years. This results in a lot of physical and psychological burdens on a patient.

It is figured out as one of methods for shortening the orthodontic treatment period that a method of giving not a continuous force but a dynamic load such as vibration is effective. Several studies about such a method have been conducted in the past.

In Non-Patent Document 1, a maxillary left lateral incisor of a Japanese monkey, to which a vibration stimulus having the maximum load of 40 gf, an average load of 25 gf, load amplitude of ± 15gf, and a frequency of 115 to 140 Hz is applied for 1.5 hours every day, is compared with a maxillary right lateral incisor of the Japanese monkey, to which a continuous force of 40 gf is applied. As a result, it has been reported that a displacement of the maxillary left lateral incisor after three weeks was larger.

In Non-Patent Document 2, in maxillary second premolars of a beagle, a displacement of one of second premolars, to which a high frequency vibration stimulus having amplitude of 100 µm, and a frequency of 28.069 kHz is applied for two minutes once every two weeks in addition to continuous force of 80 gf, is compared with a displacement of the other second premolar, to which only continuous force of 80 gf is applied in the same individual. As a result, it has been reported that the displacement of the tooth under both of the continuous force and the high frequency vibration stimulus was larger than the displacement of the tooth under only the continuous force.

As techniques of attempting to implement a device of giving vibration to a tooth, Patent Document 1 proposes a device of coupling a mouthpiece type aligner, into which a metal wire is embedded, with a transducer outside an oral cavity. The device applies a pulsed load to the entire dentition by attaching a mouthpiece type aligner. This device applies vibration generated by the transducer to the entire dentition of a user during occlusion of the mouthpiece type aligner by the user, but has a problem that vibration characteristics transmitted to the dentition depends on an occlusion condition of the patient. If it is required to move only a specific tooth, it is problematic that vibration is applied to the entire dentition which includes a tooth without requirement for movement.

As techniques of attempting to implement a device for giving vibration only to a specific dentition, Patent Document 2 proposes a device of coupling an metal orthosis attachable to an individual tooth with a transducer outside an oral cavity. The device applies a pulsed load to an arbitrary tooth to which the orthosis is attached. Patent Document 3 proposes a device configured to generate vibration from a probe which is pressed against a tooth.

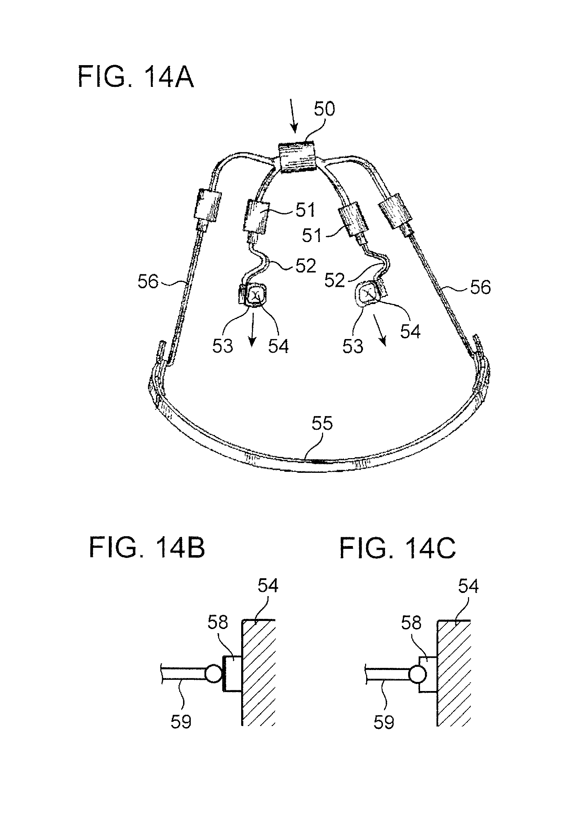

With regard to the device in Patent Document 2, ring fittings 53 at the distal ends of coupling fittings 52 of vibrators 51 driven by a motor 50 cover the teeth 54 of a user, as shown in Fig. 14A. Holders 56 are fixed to a holding band 55 wound around the back of the user's head. Accordingly, the motor 50, the vibrators 51 and alike are held between the back of the user's head and the teeth 54. Then, the vibrators 51 vibrates the teeth 54 (dynamic load) while the holding band 55 applies a static load to the teeth 54.

As shown in Figs. 14B and 14C, there is a proposal about a device which has a vibration generation probe 59 pressed against a bracket 58 of an orthodontic appliance affixed to a tooth 54 to vibrate the tooth 54 (dynamic load) from this vibration generation probe 59 (Patent Document 3).

However, the holding band 55, the holders 56, the motor 50, the vibrators 51, the coupling fittings 52, the ring fittings 53 and alike of the device in Patent Document 2 are interposed between the back of the user's head and the teeth 54. Therefore, the device becomes large and heavy. If the teeth 54 subjected to vibration are changed, it is necessary to adjust positions of the coupling fittings 52 or to replace the device with another device which has the coupling fittings 52 matching positions of the teeth 54. A vibrational load is also transmitted to the holding band 55. Therefore, it depends on an attaching condition of the holding band 55 whether the teeth are subjected to a continuous load or not because of a change in a load applied to the teeth 54. If an impact is applied to the device outside an oral cavity, a dentition may be damaged. Therefore, there is a problem that the device in Patent Document 2 is impracticable.

With regard to the device in Patent Document 3, a user has to grasp the vibration generation probe 59. Therefore, there is a problem that a load applied to the tooth 54 depends on how to hold or press the vibration generation probe 59.
Patent Document 1: U.S. Patent No. 4123844 (Description)
Patent Document 2: U.S. Patent No. 4229165 (Description)
Patent Document 3: Japanese Patent No. 4333730

Non-Patent Document 1: Shimizu: Journal of Japanese Orthodontic Society 45: 56-72, 1986
Non-Patent Document 2: Ohmae, et al.: Journal of Japanese Orthodontic Society, 60 (4): 201,2001

### Summary of the Invention

An object of the present invention is to provide a small and lightweight vibrating dental device, which may be attached detachably to an orthodontic appliance attached to the teeth. Another object of the present invention is to provide a vibrating dental device, which is easily attached and detached to and from an orthodontic appliance. The vibrating dental device may apply a continuous load to the teeth if the vibrating dental device is directly fixed to the orthodontic appliance. The vibrating dental device enables safe usage because the vibrating dental device is disengaged under an external impact applied to the device.

In order to attain the aforementioned problems, the present invention provides a vibrating dental device configured to vibrate a specific tooth in a dentition to which an orthodontic appliance is attached. The vibrating dental device includes: a vibration source; a contact portion, which comes into contact with the orthodontic appliance to vibrate the specific tooth in the dentition; and a vibration transmitter, which transmits vibration generated by the vibration source to the contact portion, wherein the contact portion is detachably attached to the orthodontic appliance.

### Brief Description of the Drawings

Fig. 1A is a perspective view showing a vibrating dental device according to an embodiment of the present invention.
Fig. 1B is an enlarged view of a main part of the vibrating dental device.
Fig. 2 is an exploded perspective view of a vibrating dental device including a vibration source and a vibration transmitter of the first example shown in Fig. 1.
Fig. 3 is an exploded perspective view of a vibrating dental device including a vibration source and a vibration transmitter of the second example.
Fig. 4 is an exploded perspective view of a vibrating dental device including a vibration source and a vibration transmitter of the third example.
Fig. 5A is a perspective view of a connector of the first example.
Fig. 5B is a sectional view of Fig. 5A.
Fig. 5C is a perspective view of a connector of the second example.
Fig. 5D is a sectional view of Fig. 5C.
Fig. 6A is a perspective view of a connector of the third example.
Fig. 6B is a sectional view of Fig. 6A.
Fig. 6C is a perspective view of a connector of the fourth example.
Fig. 6D is a sectional view of Fig. 6C.
Fig. 7A is a perspective view of a connector of the fifth example.
Fig. 7B is a sectional view of Fig. 7A.
Fig. 7C is a perspective view of a connector of the sixth example.
Fig. 7D is a sectional view of Fig. 7C.
Fig. 8A is a perspective view of a connector of the seventh example.
Fig. 8B is a sectional view of Fig. 8A.
Fig. 8C is a perspective view of a connector of the eighth example.
Fig. 8D is a sectional view of Fig. 8C.
Fig. 9A is a perspective view of a connector of the ninth example.
Fig. 9B is a sectional view of Fig. 9A.
Fig. 9C is a perspective view of a connector of the tenth example.
Fig. 9D is a sectional view of Fig. 9C.
Fig. 9E is a perspective view of a connector of the eleventh example.
Fig. 9F is a sectional view of Fig. 9E.
Fig. 10A is a sectional side view of a vibrating dental device, which is attached to a tooth, according to another embodiment of the present invention.
Fig. 10B is a sectional side view of the device which is detached from the tooth.
Fig. 10C is a sectional side view of a modification of Fig. 10B.
Fig. 10D is a sectional side view of a modification of a fitting portion and an adhesive portion.
Fig. 11A is a front view of a dentition including the tooth of Fig. 10
Fig. 11B is a sectional view of a vibrating dental device according to yet another present invention.
Figs. 12A to 12C are sectional side views for vibrating dental devices according to yet another embodiment of the present invention.
Fig. 13 is a sectional side view of a vibrating dental device according to yet another embodiment of the present invention.
Fig. 14A is a perspective view of a conventional orthodontic treatment device described in Patent Document 2.
Figs. 14B and 14C are sectional views of an orthodontic treatment device of Patent Document 3.

### DETAILED DESCRIPTION OF THE INVENTION

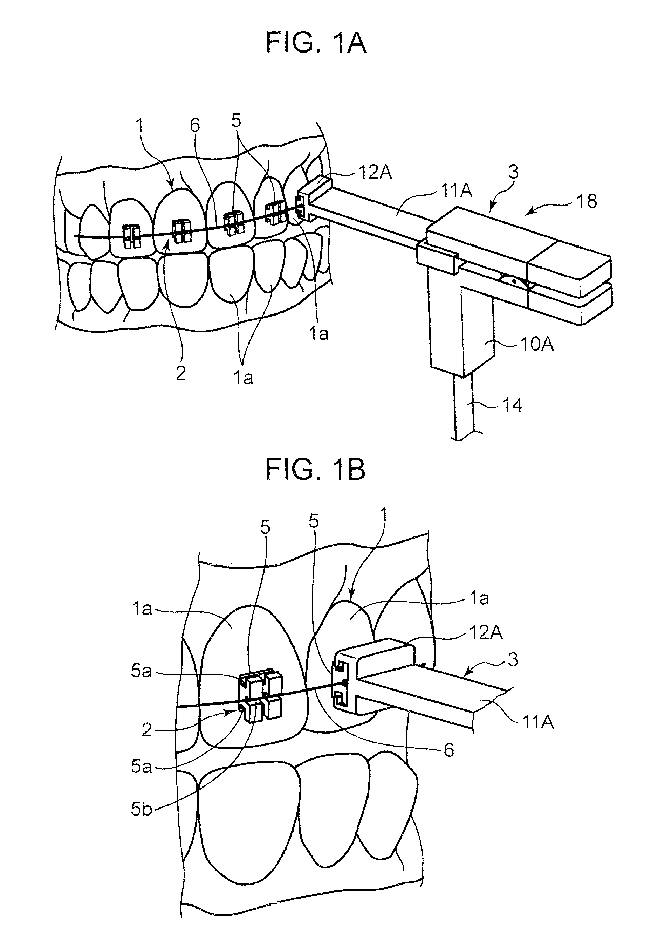

Hereinafter, modes for carrying out the present invention are described in detail with reference to the figures. Fig. 1A is a perspective view of a vibrating dental device 3 configured to vibrate a specific tooth 1a in a dentition 1, to which an orthodontic appliance 2 is affixed. Fig. 1B is an enlarged view of a main part of the vibrating dental device 3.

Each of brackets 5 as the orthodontic appliance 2 is adhered to and affixed to a corresponding one of the front surfaces of the specific teeth 1a in the dentition 1. Each of these brackets 5 is generally adhered at strength of 100 N.

Each bracket 5 has paired depressions 5a, which are opened upward and downward on the upper and lower sides of the bracket 5. The bracket 5 has a slit 5b, into which a wire 6 as the orthodontic appliance 2 is fitted, on an intermediate portion in the vertical direction. The wire 6 is arranged along the dentition 1, and extends over and is fitted in the slits 5b of the adjacent brackets 5. The wire 6 may be fixed in the depressions 5a by a rubber pressing plate, a binding wire or alike. Consequently, a continuous load is applied to the tooth la to be aligned by a restoring force of the wire 6. Each bracket 5 may be attached by a hook configured to fix elastic for alignment.

The vibrating dental device 3 includes a vibration source 10(A to C) (i.e. any one of vibration sources 10A to 10C), a connector 12(A to J) (i.e. any one of connectors 12A to 12J), which comes into contact with the bracket 5 or the wire 6 as the orthodontic appliance 2 to vibrate the specific tooth 1a in the dentition 1 via the bracket 5 or the wire 6, and vibration transmitter 11(A to C) (i.e. any one of vibration transmitters 11 A to 11 C), which transmits the vibration generated by the vibration source 10(A to C) to the connector 12(A to J). The connector 12(A to J) is detachably attached to the bracket 5 or the wire 6. When the connector 12(A to J) is attached to the bracket 5 or the wire 6, the connector 12(A to J) is fixed to the bracket 5 or the wire 6 so as not to be detached under vibration. On the other hand, the connector 12(A to J) is detachable from the bracket 5 or the wire 6 by an application of an external force larger than the vibration. The connector 12(A to J) is included in a concept of the contact portion of the present invention.

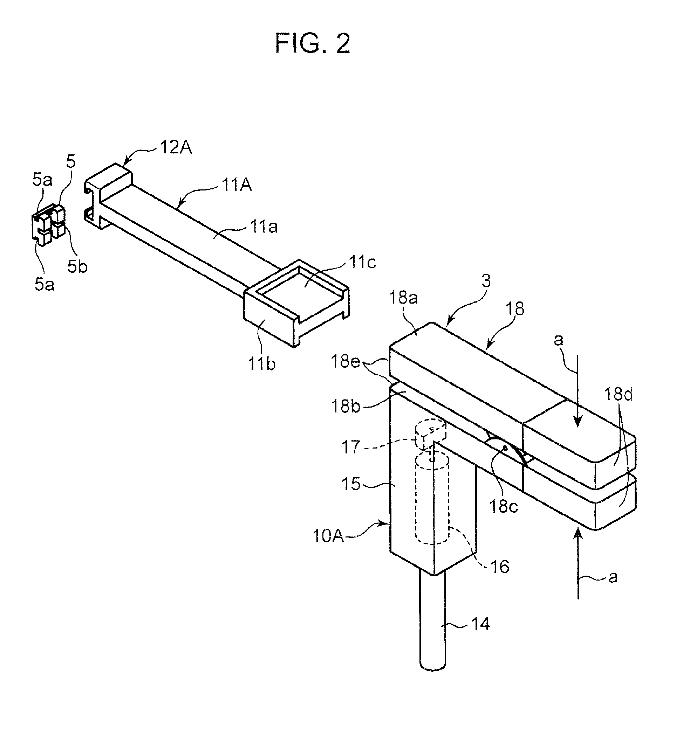

As shown in Fig. 2, a small electric motor 16 configured to eccentrically rotate an eccentric member 17 is housed in a quadrangular prism-shaped vibration box 15 of the vibration source 10A of the first example. When electricity is supplied to the electric motor 16 from the wiring cord 14, the eccentric member 17 eccentrically rotates by rotation of the electric motor 16 to generate vibration.

A clip member 18 which laterally protrudes is mounted on an upper portion of the vibration box 15. This clip member 18 has a pair of upper and lower clip portions 18a, 18b. The clip portions 18a, 18b are openably and closably connected by a hinge 18c. The upper clip portion 18a is urged toward the lower clip portion 18b by a spring (not shown) to close the distal end. Then, each of the proximal ends 18d of both of the clip portions 18a, 18b are simultaneously held between fingers (c.f. the arrows a) to open each of the distal ends 18e against the urging force of the spring.

The vibration transmitter 11A of the first example has a rectangular vibration plate 11a. The connector 12A of the first example is integrally formed with the vibration plate 11a on the distal end of the vibration plate 11a. A clipped portion 11b is integrally formed with the vibration plate 11a on the proximal end of the vibration plate 11 a. The clipped portion 11b has a recess 11c. The recess 11c is connected by the clip member 18. Then, the distal ends of the both of the clip portions 18a, 18b are opened to separate the clipped portion 11b from the clip member 18.

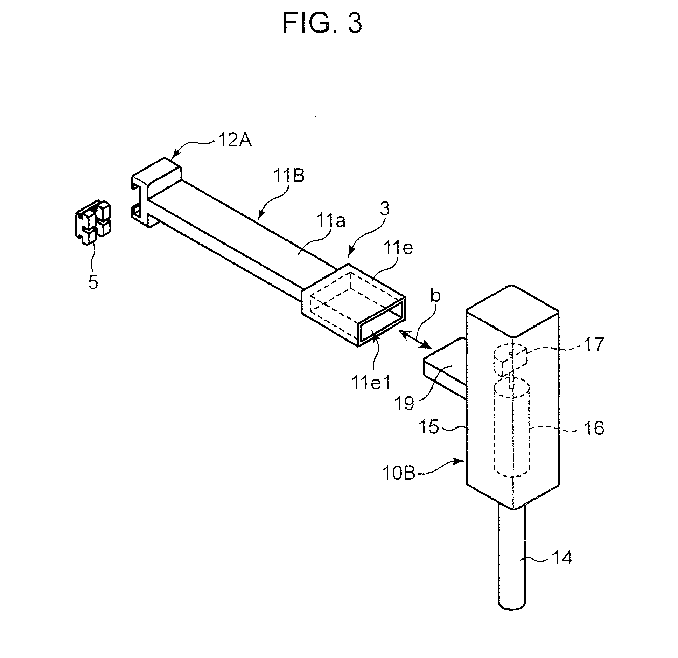

In the vibration source 10B of the second example shown in Fig. 3, a protrusion 19 is provided on the side of a vibration box 15, instead of the clip member 18 in Fig. 2. The protrusion 19 is integrally formed with the vibration box 15. A receiving portion 11e is integrally formed with a vibration plate 11a on the proximal end of the vibration plate 11a in a vibration transmitter 11 B of the second example. The receiving portion 11e has a press-fitting insertion hole 11e1, into which the protrusion 19 is separably press-fitted (c.f. the arrow b). The protrusion 19 is pulled away from the press-fitting insertion hole 11e1, so that the protrusion 19 is separated from the receiving portion 11e.

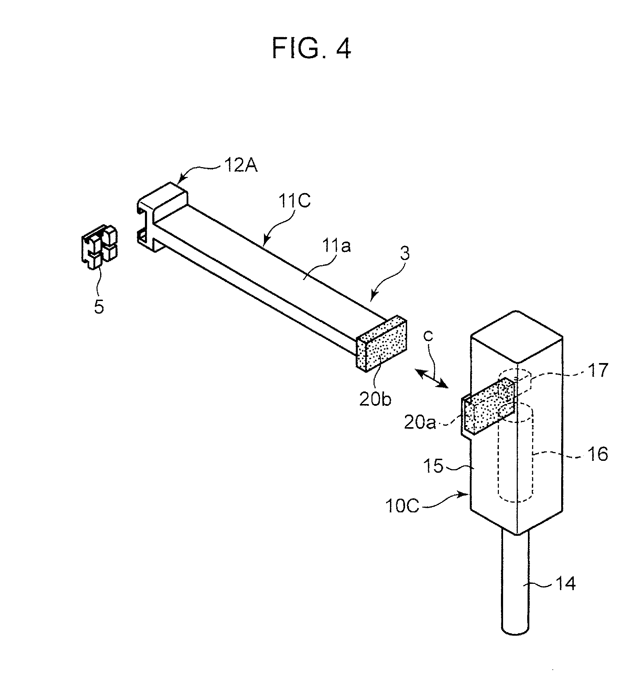

With regard to a vibration source 10C of the third example shown in Fig. 4, a first permanent magnet 20a is fixed to the side of the vibration box 15, instead of the clip member 18 in Fig. 2. With regard to a vibration transmitter 11C of the third example, a second permanent magnet 20b separably attracted to the first permanent magnet 20a (c.f. the arrow c) is fixed on the proximal end of the vibration plate 11a.

The vibration box 15 of each of the vibration sources 10A to 10C is made of synthetic resin. The vibration box 15 houses only the small electric motor 16 configured to eccentrically rotate the eccentric member 17. Each of the vibration transmitters 11A to 11C and the connectors 12A to 12J are made of synthetic resin. Therefore, the vibrating dental device 3 is small and lightweight as a whole.

With regard to the vibration source 10A shown in Fig. 2, the vibration transmitter 11A is separably connected by the clip member 18. With regard to the vibration source 10B shown in Fig. 3, the protrusion 19 is pressed and fitted into the receiving portion 11e of the vibration transmitter 11B to hold the vibration transmitter 11B. With regard to the vibration source 10C shown in Fig. 4, the first and second permanent magnets 20a, 20b are attracted to each other to hold the vibration transmitter 11C.

The connector 12A does not have to be integrally formed with the vibration plate 11a on the distal end of the vibration plate 11a of each of the vibration transmitters 11A to 11C. The connector 12A may be separably inserted into the vibration plate 11a.

Herein, the term "separably" means that separation of these coupling portions by manual operation results in separation and easy replacement of the vibration transmitters 11 A to 11C or the connectors 12A to 12J. The term "separably" means that the coupling portions are separated to cause natural detachment when a predetermined impact force [e.g. a load, which is larger than an applied vibrational load and smaller than a strength of adhesive bonding (about 100 N) of each bracket 5] acts on these coupling portions.

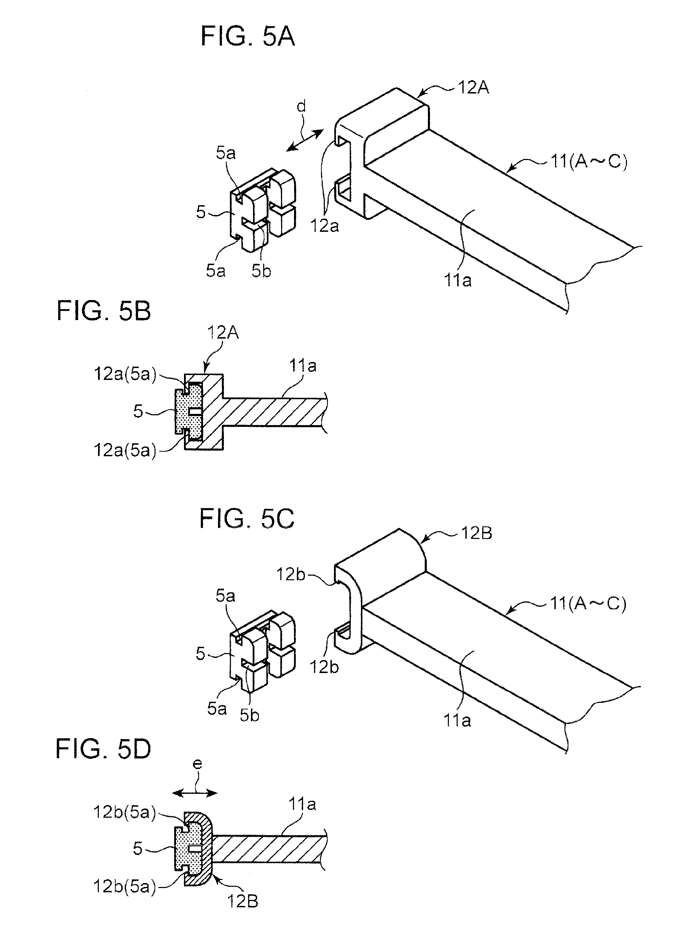

The connector 12A of the first example shown in Figs. 5A and 5B is made of hard synthetic resin. The connector 12A is formed in a sideways U-shape (i.e. a shape in which paired claws 12a are vertically arranged so that a gap between the claws are opened sideways). The connector 12A has the paired claws 12a on the both ends (upper and lower ends). The claws 12a are formed on the end closer to the tooth surface in the connector 12A.

The claws 12a on the both ends are slid and fitted in a pair of the upwardly and downwardly opened depressions 5a of the bracket 5 from the side (c.f. the arrow d), so that the claws 12a on the both ends may be engaged with the depressions 5a. When the claws 12a on the both ends are engaged with the depressions 5a, the connector 12A may be slid laterally on the bracket 5 to cause disengagement. Therefore, the connector 12A is detachably attached to the bracket 5.

In such a type that the connector 12A is formed in the sideways U-shape so that the connector 12A is slid and fitted into a pair of the upwardly and downwardly opened depressions 5a of the bracket 5 from the side (including the following connector 12C and alike), one of right and left openings may be closed by a closing wall. Thus, the closing wall abuts on brackets 5 when the connector 12A is slid from the side and fitted on the bracket 5, which results in accurate positioning of a slide position of the connector 12A on the bracket 5.

The connector 12B of the second example shown in Figs. 5C and 5D is made of soft synthetic resin. The connector 12B is formed in a sideways U-shape. The connector 12B has the paired claws 12a on the both ends (upper and lower ends). The claws 12b are formed on the end closer to the tooth surface in the connector 12B.

When the claws 12b on the both ends are pressed against a pair of upwardly and downwardly opened depressions 5a of the bracket 5 from the front (i.e. direction of the arrow e of Fig. 5D), the claws 12b on the both ends are bent and engaged with the depressions 5a. When the claws 12b on the both ends are engaged with the depressions 5a, the connector 12B may be strongly pulled backward from the bracket 5 to cause disengagement (snap-fit). Accordingly, the connector 12B is detachably attached to the bracket 5.

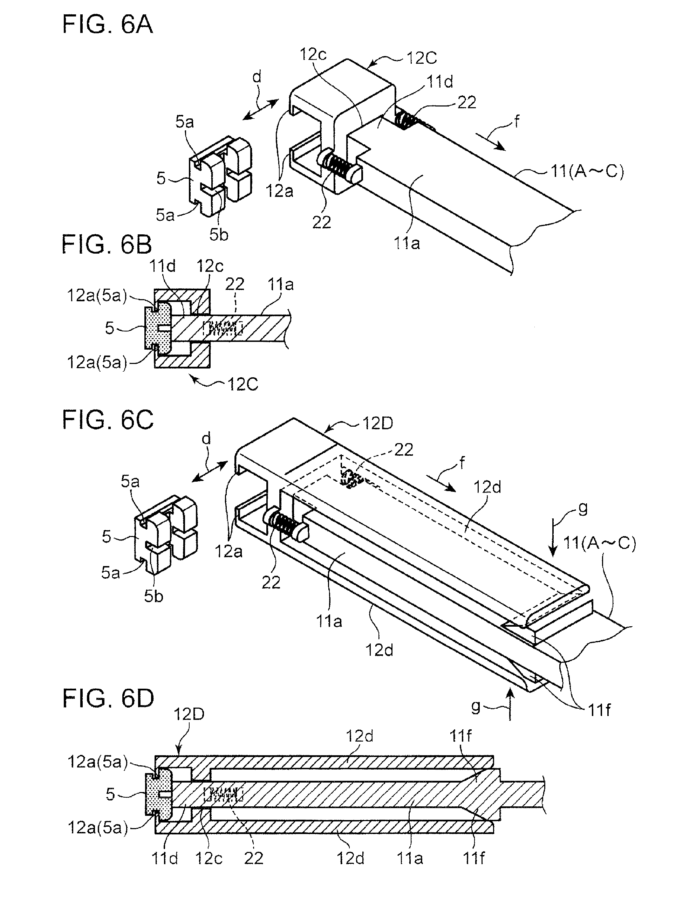

The connector 12C of the third example shown in Figs. 6A and 6B is made of hard synthetic resin. The connector 12C is formed in a sideways U-shape. The connector 12C has the paired claws 12a on the both ends (upper and lower ends). The claws 12b are formed on the end closer to the tooth surface in the connector 12C.

The claws 12a on the both ends are slid and fitted in a pair of the upwardly and downwardly opened depressions 5a of the bracket 5 from the side (c.f. the arrow d), so that the claws 12a on the both ends may be engaged with the depressions 5a. When the claws 12a on the both ends are engaged with the depressions 5a, the connector 12C may be laterally slid on the bracket 5 to cause disengagement.

A through hole 12c is formed in the bottom of the connector 12C (specifically, portion facing the paired claws 12a. The same applies to the following). A protrusion 11d on the distal end of the vibration plate 11a is inserted into the through hole 12c. Springs 22 configured to urge the protrusion 11d of the vibration plate 11a toward the bracket 5 are provided between the connector 12C and the vibration plate 11 a.

The connector 12C is held between fingers of one of the hands. The vibration plate 11a is moved in the direction of the arrow f (i.e. direction in which the springs 22 are stretched) against the urging force of the springs 22 by fingers of the other hand to fit the connector 12C on the bracket 5. The fingers are then separated from the vibration plate 11a. Meanwhile, the protrusion 11d of the vibration plate 11a is urged toward the bracket 5 by the urging force of the springs 22, so that the protrusion 11d passes through the connector 12C, and then abuts and stops at the front surface of the bracket 5. At this time, the bracket 5 is pressed by the claws 12a. In short, the connector 12C may be smoothly fitted on the bracket 5 with some play. Thereafter, the protrusion 11d abuts on the front surface of the bracket 5, so that the connector 12C is attached to the bracket 5 without looseness.

The connector 12C is fitted on the bracket 5 under play between the claws 12a of the connector 12C and the depressions 5a of the bracket 5. This is because dental calculus adhered to the bracket 5 and working as an obstruction makes it difficult for the connector 12C to be fitted on the bracket 5. The play of the connector 12C with respect to the bracket 5 is allowed so that the connector 12C is applicable to several types of geometrically different brackets 5. If the play of the connector 12C with respect to the bracket 5 is allowed, looseness of the connector 12C with respect to the bracket 5 is caused. Therefore, it is necessary to hold the connector 12C on the bracket 5 without looseness.

A connector 12D of the fourth example shown in Figs. 6C and 6D is made of hard synthetic resin. The connector 12D is formed in a sideways U-shape. A pair of upper and lower holding plates 12d extends backward from the upper and lower ends of the connector 12D. The pair of upper and lower holding plates 12d faces with the upper and lower surfaces of the vibration plate 11a with clearances therebetween.

A through hole 12c is formed on the bottom of the connector 12D (i.e. a portion formed on an end opposite to the tooth surface in the connector 12D). A protrusion 11d on the distal end of the vibration plate 11a is inserted into the through hole 12c. Springs 22 configured to urge the protrusion 11d of the vibration plate 11a toward the bracket 5 (i.e. toward the connector 12D) are provided between the connector 12C and the vibration plate 11a. The vibration plate 11a is pressed against the bracket 5 by the elastic force of the springs 22.

Respective slope portions 11f are formed on the upper and lower surfaces of the vibration plate 11a. The slope portions 11f have slopes which incline in a direction away from the upper and lower surfaces of the vibration plate 11a as distant from the connector 12D. When the pair of the upper and lower holding plates 12d is held between fingers in the direction of the arrow g, the slopes of the slope portions 11f are pressed by the ends of the holding plates 12d to move the vibration plate 11a in the direction of the arrow f (i.e. direction away from the connector 12D) against the urging force of the springs 22.

Therefore, if the holding plates 12d are held between fingers of one of the hands, the vibration plate 11a moves in the direction of the arrow f against the urging force of the springs 22 due to the slope portions 11f. In this state, the claws 12a of the connector 12D are fitted in the depressions 5a of the bracket 5. The fingers are then separated from the holding plates 12d. After that, the protrusion 11d of the vibration plate 11a is urged toward the bracket 5 by the urging force of the springs 22, so that the protrusion 11d abuts and stops at the front surface of the bracket 5. Consequently, the connector 12D may be smoothly fitted on the bracket 5 under the play between the connector 12D and the bracket 5. The protrusion 11d then abuts and stops at the front surface of the bracket 5. Therefore, the connector 12D may be fixed to the bracket 5 without looseness. The moving operation of the vibration plate 11a may be performed only by the fingers of one of the hands, which results in good operability.

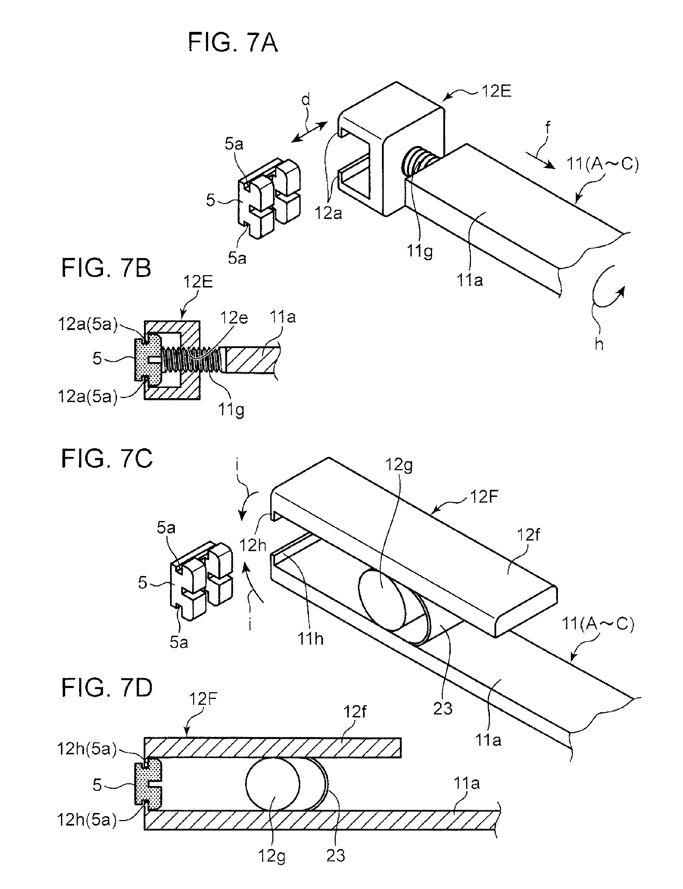

A connector 12E of the fifth example shown in Figs. 7A and 7B is made of hard synthetic resin. The connector 12E is formed in a sideways U-shape. Claws 12a on the both ends of the connector 12E are slid and fitted in a pair of the upwardly and downwardly opened depressions 5a of the bracket 5 from the side (c.f. the arrow d), so that the claws 12a on the both ends may be engaged with the depressions 5a of the bracket 5. When the claws 12a on the both ends are engaged with the depressions 5a, the connector 12E may be laterally slid on the bracket 5 to cause disengagement.

A screw hole 12e is formed in the bottom of the connector 12C. A screw 11g on the distal end of the vibration plate 11a is screwed into the screw hole 12e.

Then, the connector 12E is fitted on the bracket 5 under a condition in which the screw 11g is loosened by movement of the vibration plate 11a in the direction of the arrow f while the vibration plate 11a is rotated in the direction of the arrow h. After that, the screw 11g of the vibration plate 11 a abuts and stops at the front surface of the bracket 5 when the vibration plate 11a is rotated in a direction opposite to the arrow h to tighten the screw 11g. Consequently, the connector 12E may be smoothly fitted on the bracket 5 under play between the connector 12E and the bracket 5. The screw 11g then abuts and stops at the front surface of the bracket 5, so that the connector 12E may be fixed to the bracket 5 without looseness.

With regard to a connector 12F of the sixth example shown in Figs. 7C and 7D, a holding plate 12f is supported on a surface of a vibration plate 11a by a hinge 12g to allow a vertical swing. A flat spring 23 configured to urge the side of the distal end of the holding plate 12f toward the side of the distal end of the vibration plate 11a is provided between the vibration plate 11a and the holding plate 12f. In short, the holding plate 12f has a distal end which is urged by the flat spring 23 toward the distal end of the vibration plate 11a.

Claws 12h, 11h are formed on the lower portion of the distal end of the holding plate 12f and the upper portion of the distal end of the vibration plate 11a, respectively. The claws 12h, 11h nip to be engaged with depressions 5a of the bracket 5 from upper and lower directions (c.f. the arrow i).

The holding plate 12f is swung by fingers of one of the hands against the urging force of the flat spring 23 in a direction opposite to the arrow i to raise up the distal end, in order to fit the connector 12F into the bracket 5 from the front. The fingers are then separated from the holding plate 12f. After that, the claw 12h of the holding plate 12f is urged toward the bracket 5 by the urging force of the flat spring 23, so that the claws 12h, 11h of the vibration plate 11a abut and stop at the bottom of the depressions 5a of the bracket 5. Consequently, the connector 12F may smoothly nip the bracket 5. Each of the claws 11h, 12h then abuts and stops at the bottom of the depression 5a of the bracket 5, so that the connector 12F may be attached to the bracket 5 without looseness.

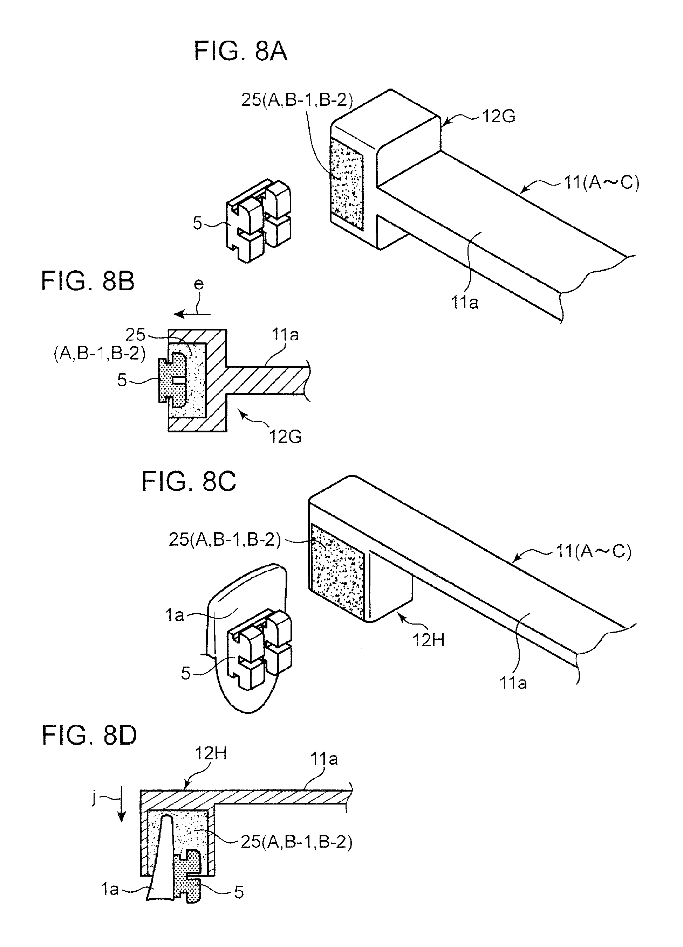

A connector 12G of the seventh example shown in Figs. 8A and 8B is made of hard synthetic resin. The connector 12G is formed in a sideways U-shape. A U-shaped cup portion is filled with first soft filler 25A. For example, the first soft filler 25A is consist of vinyl acetate resin. The first soft filler 25A has softness and adhesiveness like chewing gum. Each of the reference numerals 25(A, B-1, and B-2) shown in Figs. 8A to 8D denotes any one of the first soft filler 25A, and second soft filler 25B-1 and second soft filler 25B-2, which are described later.

The first soft filler 25A is pressed against the bracket 5 from the front (c.f. the arrow e in Fig. 8B), so that the first soft filler 25A is deformed so as to fit the outer shape of the bracket 5 and attached to the bracket 5 with adhesive force. When the first soft filler 25A is attached to the bracket 5 with the adhesive force, the first soft filler 25A is fixed to the bracket 5 so as not to be detached under vibration. When the bracket 5 is attached by the first soft filler 25A, the connector 12G may be strongly pulled backward to peel the first soft filler 25A from the bracket 5 (peeling timing is described later). Thus, the connector 12G is detachably attached to the bracket 5 with the adhesive force of the first soft filler 25A.

Instead of the first soft filler 25A, the second soft filler 25B-1 may be filled into the connector 12G. For example, the second soft filler 25B-1 is consist of photocrosslinkable resin. The second soft filler 25B-1 has gelatinous softness. When the second soft filler 25B-1 is externally irradiated with ultraviolet rays or blue light, the second soft filler 25B-1 is polymerized and hardened.

The second soft filler 25B-1 is pressed against the bracket 5 from the front (c.f. the arrow e), so that the second soft filler 25B-1 is deformed so as to fit the outer shape of the bracket 5. The second soft filler 25B-1 is irradiated and hardened with ultraviolet rays in this deformed state. The connector 12G is attached to the bracket 5 by the hardened second soft filler 25B-1. When the second soft filler 25B-1 is attached to the bracket 5 with adhesive force, the second soft filler 25B-1 is fixed to the bracket 5 so as not to be detached. When the bracket 5 is attached by the second soft filler 25B-1, the connector 12G is strongly pulled backward to break the second soft filler 25B-1, so that the connector 12G may be detached from the bracket 5 (peeling timing is described later). Thus, the connector 12G is detachably attached to the bracket 5 by the hardened second soft filler 25B-1.

Instead of the second soft filler 25B-1, the second soft filler 25B-2 may be filled. For example, the second soft filler 25B-2 is consist of a dental impression made of silicone. The two liquids of silicone normally have gelatinous softness. However, the two liquids are hardened by chemical reaction when the two liquids are mixed.

The second soft filler 25B-2 is pressed against the bracket 5 from the front (c.f. the arrow e), so that the second soft filler 25B-2 is deformed so as to fit the outer shape of the bracket 5. The second soft filler 25B-2 is hardened in this deformed state over a prescribed time. Accordingly, the connector 12G is attached to the bracket 5 by the hardened second soft filler 25B-2. When the second soft filler 25B-2 is attached to the bracket 5 by the adhesive force, the second soft filler 25B-2 is fixed to the bracket 5 so as not to be detached under vibration. When the bracket 5 is attached by the second soft filler 25B-2, the connector 12G may be strongly pulled backward to break the second soft filler 25B-2, so that the connector 12G may be detached from the bracket 5 (peeling timing is described later). Thus, the connector 12G is detachably attached to the bracket 5 by the hardened second soft filler 25B-2.

It is preferable that the peeling timing of the first soft filler 25A and the breakage timing of each of the second soft fillers 25B-1, 25B-2 are set when a load [e.g. a load which is larger than an applied vibrational load and smaller than a strength of adhesive bonding (about 100 N) of the bracket] acts on the adhesive part 12G.

A connector 12H of the eighth example shown in Figs. 8C and 8D is made of hard synthetic resin. The connector 12H is formed in a reversed U-shape (specifically, a shape with downward opening. The same applies to the following). A space of the U-shaped portion filled with any one of the first soft filler 25A, and the second soft fillers 25B-1, 25B-2 (hereinafter, referred to as soft filler 25(A, B-1, -2)).

In this connector 12H, the soft filler 25(A, B-1, -2) is pressed against the bracket 5 and the tooth 1a from above (c.f. the arrow j), so that the soft filler 25(A, B-1, -2) may be deformed so as to fit the outer shape of the bracket 5 and the tooth 1a.

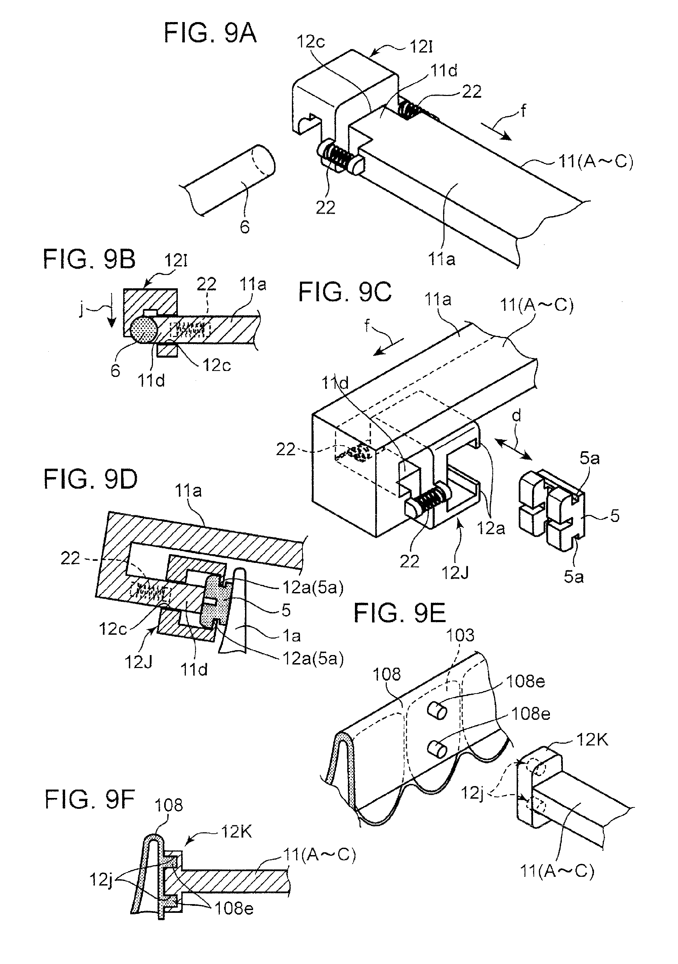

Each of the connector 12A to 12H is detachably attached to the bracket 5. Alternatively, each of the connector 12A to 12H may be detachably attached to the wire 6 like a connector 121 of the ninth example shown in Figs. 9Aand 9B.

This connector 121 is made of hard synthetic resin. The connector 12I is formed in a reversed U-shape. The connector 12I may be fitted on and engaged with the wire 6 from above (c.f. the arrow j). When the connector 12I is engaged with the wire 6, the connector 121 may be lifted upward to cause disengagement.

A through hole 12c is formed in a portion of a wall closer to a vibration plate 11a a (bottom) in the connector 12I. A protrusion 11d on the distal end of the vibration plate 11a is inserted into the through hole 12c. Springs 22 configured to urge the protrusion 11d of the vibration plate 11a toward the wire 6 are provided between the connector 12I and the vibration plate 11a.

The connector 12I is held between fingers of one of the hands. The vibration plate 11a is moved in the direction of the arrow f against an urging force of the springs 22 by fingers of the other hand to fit the connector 121 on the wire 6. After that, the fingers are separated from the vibration plate 11 a. Meanwhile, the protrusion 11d of the vibration plate 11 a is urged toward the wire 6 by the urging force of the springs 22, so that an arc portion of the distal end of the protrusion 11d abuts and stops at the wire 6. Consequently, the connector 121 may be smoothly fitted on the wire 6 under play between the connector 12I and the wire 6. The protrusion 11d then abuts and stops at the wire 6, so that the connector 12I may be attached to the wire 6 without looseness. When the connector 12I is attached to the wire 6, the connector 12I is fixed to the wire 6 so as not to be detached under vibration.

Although it is assumed that with regard to each of the connectors 12A to 12I, the bracket 5 is affixed to the front surface of the tooth 1 a, the bracket 5 affixed to the rear surface of the tooth 1a may be applicable like a connector 12J of the tenth example in Figs. 9C and 9D.

A vibration plate 11a is extended forward. The vibration plate 11a is bent in a U-shape so that the distal end of the vibration plate 11a faces the rear surface of the tooth 1a (overhang). A connector 12J is provided on this bent distal end.

The connector 12J is made of hard synthetic resin. The connector 12J is formed in a sideways U-shape. The connector 12J has paired claws 12a on the both ends. The claws 12a on the both ends are slid and fitted in a pair of upwardly and downwardly opened depressions 5a of the bracket 5 on the rear surface of the tooth 1a from the side (c.f. the arrow d), so that the claws 12a on the both ends are engaged with the depressions 5a. When the claws 12a on the both ends are engaged with the depressions 5a, the connector 12J may be slid laterally to cause disengagement.

A through hole 12c is formed in the bottom of the connector 12J. A protrusion 11d on the distal end of the vibration plate 11a is inserted into the through hole 12c. Springs 22 configured to urge the protrusion 11d of the vibration plate 11 a toward the bracket 5 are provided between the connector 12J and the vibration plate 11a.

The connector 12J is held between fingers of one of the hands. The vibration plate 11a is moved in the direction of the arrow f against the urging force of the springs 22 by fingers of the other hand to fit the connector 12J on the bracket 5. The fingers are then separated from the vibration plate 11a. Meanwhile, the protrusion 11d of the vibration plate 11a is urged toward the bracket 5 with an urging force of the springs 22, so that the protrusion 11d abuts and stops at the bracket 5 arranged on the rear surface of the tooth 1a. Consequently, the connector 12J may be smoothly fitted on the bracket 5 under play between the connector 12J and the bracket 5. After that, the protrusion 11d abuts and stops at the bracket 5 on the rear surface of the tooth 1a, so that the connector 12J may be attached to the bracket 5 without looseness.

In each of the embodiments, vibration is applied to the specific tooth 1a in the dentition 1. On the contrary, the vibrating dental device 3 may have vibration transmitters 11 A to 11C branched from vibration source 10A to 10C, respectively. The vibrating dental device 3 may be configured so that connectors 12A to 12J of the branched vibration transmitters 11A to 11C are mounted on the brackets 5 of some of the teeth 1a. Thus, vibration may be applied to some of the specific teeth 1a in the dentition 1 at the same time.

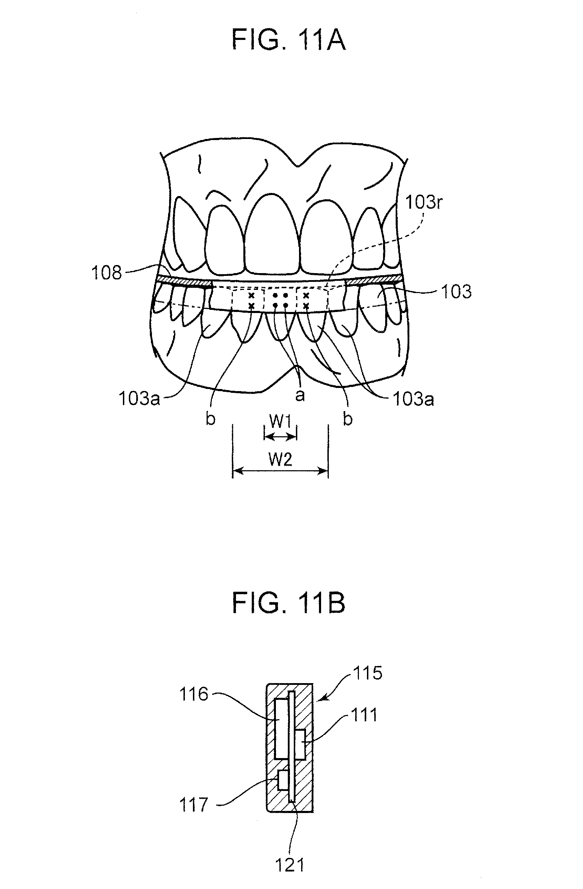

Each of the connectors 12A to 12H may be detachably attached to a mouthpiece type aligner 108 attached to a dentition 103 (specifically, see the dentition 103 in Fig. 11A), like a connector 12K of the eleventh example shown in Figs. 9E and 9F.

The connector 12K has recessed fitting portions 12j. Protrusive projections 108e provided on the front surface of the mouthpiece type aligner 108 are pressed and inserted into the recessed fitting portions 12j, so that the connector 12K is detachably attached to the mouthpiece type aligner 108.

The fitting portions 12j desirably have the same outer shapes as the protrusive projections 108e provided on the front surface of the mouthpiece type aligner 108. Thus, the vibrating dental device may be reliably fixed to the mouthpiece type aligner 108. Consequently, vibration generated by a vibration generator 111 may be effectively applied to the dentition 103.

The fitting portions 12j may have outer shapes slightly smaller than the protrusive projections 108e provided on the mouthpiece type aligner. The fitting portions 12j may be fixed by press fitting.

Although the connector 12K has the recessed fitting portions 12j, the present invention is not limited to this. Recessed fitting portions may be provided in the mouthpiece type aligner 108 while protrusive projections may be provided on a connector.

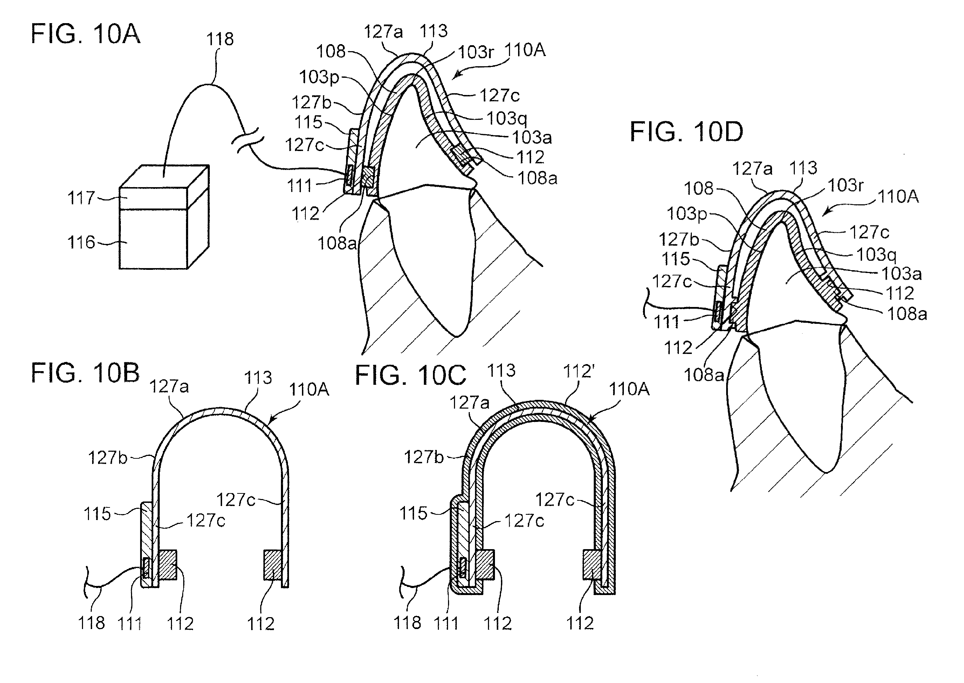

With regard to a vibrating dental device according to another embodiment of the present invention, a vibrating dental device includes a vibration source, a vibration transmitter, and a connector which are sized to be housed in an oral cavity. The vibrating dental device comes into contact with a mouthpiece type aligner to vibrate a specific tooth. The vibrating dental device is described with reference to Figs. 10 to 13.

Fig. 10A is a sectional side view of a vibrating dental device, which is mounted on a tooth, according to another embodiment of the present invention. Fig. 10B is a sectional side view of the device which is detached from the tooth. Fig. 10C is a sectional side view of a modification of Fig. 10B. Fig. 10D is a sectional side view of a modification of a fitting portion and an adhesive portion.

The mouthpiece type aligner 108 is a mouthpiece type aligner made of synthetic resin, as shown in Figs. 10A and 10B, and Fig. 11A. The mouthpiece type aligner 108 is fitted (tightly fitted) from the side of occlusion surfaces 103r to be attached to front surfaces 3p and rear surfaces 3q of teeth 103a in a dentition 103. The mouthpiece type aligner 108 is attached to substantially all of the teeth 103a in the dentition 103 in series. The number of the teeth 103a to be aligned is not limited to one.

Then, a continuous force is applied to the teeth 103a to be aligned or teeth 103a around the teeth 103a (hereinafter, these may be simply referred to as teeth 103a) by an elastic force of the mouthpiece type aligner 108 to correct the teeth alignment or the occlusion of the dentition 103.

A vibrating dental device 110A shown in Figs. 10A and 10D includes at least a vibration generator 111, a transmitter 113, which extends over the occlusion surfaces 103r of the teeth 103a, and contact portions 112, which are mounted on the inner surfaces of the both ends of the transmitter 113. The vibrating dental device 110A is configured as one unit including the vibration generator 111, the transmitter 113 and the contact portions 112. This vibrating dental device 110A is sized to enable detachable attachment on the mouthpiece type aligner 108 around the teeth 103a to be aligned, as shown in Fig. 11A. For example, the size of the vibrating dental device 110A is set to a width W1 corresponding one tooth 103a or a width W2 corresponding the teeth 103a.

The vibration generator 111 is included in the concept of a vibration source of the present invention. The contact portion 112 is included in the concept of a contact portion of the present invention. The transmitter 113 is included in the concept of a vibration transmitter of the present invention (The same applies to the following).

The contact portions 112 of the vibrating dental device 110A are brought into contact with the mouthpiece type aligner 108 corresponding to the front surfaces 103p and the rear surfaces 103q of the teeth 103a to be aligned or the teeth 103a therearound. The contact portions 112 are coupled to the mouthpiece type aligner 108.

For example, the vibration generator (actuator) 111 is consist of an electric motor configured to generate mechanical vibration by an eccentric weight attached to a rotary shaft, or a linear motor with a movable piece which reciprocates.

For example, Model No. KHN4NZ manufactured by Minebea Co., Ltd. is used as the eccentric rotation (vibration) motor. Model No. FM34F manufactured by TPC Inc. is used as the disk type (coin-shaped) vibration motor. Particularly, with the commercially available disk type (coin-shaped) vibration motor, it is unnecessary to install a cover required for motor rotation which prevents inhibition of a rotary portion. Accordingly, the vibrating dental device 110A may be further miniaturized.

The vibration generator 111 is air tightly molded (housed) in a resin block 115. Although resin for forming the resin block 115 is not particularly limited, polystyrene, polypropylene or alike having high vivo stability is preferably used.

The contact portions 112 are connected to the mouthpiece type aligner 108. The contact portions 112 are detachably attached to the mouthpiece type aligner 108. The contact portions 112 are fixed to the mouthpiece type aligner 108 so as not to be detached under vibration when the contact portions 112 are attached to the mouthpiece type aligner 108.

The vibration generator 111 or the contact portions 112 may be consist of soft resin with Shore hardness A of 90 or less. The contact portions 112 are consist of soft resin to reduce high speed components of vibration. Consequently, it is possible to prevent resultant damage to a dentition or the gums from vibration. Although the soft material for forming the contact portions 112 is not particularly limited, EVA (ethylene vinyl acetate resin) widely used as a material of mouthpiece type aligners (or mouth guard), silicone rubber used for medical apparatuses or alike is preferable because these materials may be less influential to allergy to teeth or gums, and secure electrical insulation.

The contact portions 112 may be consist of a soft material which plastically deforms. In this case, the contact portions 112 consisting of the soft material plastically deform so that the contact portions 112 may match various shapes of a dentition to reliably transmit vibration to the dentition 103. The soft material reduces impulsive vibration, so that there may be less resultant damage to a dentition or the gums from vibration.

Although the soft material which plastically deforms is not particularly limited, paraffin wax, microcrystalline wax, beeswax, or a mixture thereof is suitable.

Specifically, an example of microcrystalline wax includes Hi-Mic1045 manufactured by Nippon Seiro, Co., Ltd. An example of paraffin wax includes Paraffin WAX-115 manufactured by Nippon Seiro, Co., Ltd., and paraffin wax manufactured by Ruby Inc. which is widely used for dental use. An example of a mixture of theses includes soft plate wax and bite wax, manufactured by GC Inc. and alike. These materials have suitable deformability, and are widely used for dental use or food. Therefore, these materials may be safely used in an oral cavity.

The transmitter 113 is consist of a substantially inverted U-shape of an elastic member 127a (specifically, a shape in which the distal ends of paired arms 127c faces downward) in side view. The resin block 115 molded with the vibration generator 111 is fixed to the side surface 127b of one of the paired arms 127c of the elastic member 127a. The protrusive contact portions 112 are mounted on the inner surfaces of the distal ends of the paired arms 127c.

Recessed fitting portions 108a, in which the protrusive contact portions 112 fit, are formed on the front and rear surfaces of the mouthpiece type aligner 108. As shown in Fig. 10D, the contact portions 112 may be recessed whereas the fitting portions 108a may be protrusive.

The paired arms 127c of the elastic member 127a are opened forward and backward by fingers to mount the vibrating dental device 110A. The fingers are then separated from the paired arms 127c when the contact portions 112 are situated on the front and back sides of the fitting portions 108a of the mouthpiece type aligner 108. The contact portions 112 are fitted to the fitting portions 108a of the mouthpiece type aligner 108 with the elastic force of the elastic member 127a. Consequently, the vibrating dental device 110A nips (grips) the mouthpiece type aligner 108 and is attached to the mouthpiece type aligner 108.

The paired arms 127c of the elastic member 127a are opened frontward and backward against the elastic force by fingers to detach the vibrating dental device 110A. The contact portions 112 are then pulled from the fitting portions 108a of the mouthpiece type aligner 108. Consequently, it is possible to detach the vibrating dental device 110A from the mouthpiece type aligner 108. Thus, the vibrating dental device 110A is detachably attached to the mouthpiece type aligner 108.

The contact portions 112 of the vibrating dental device 110A are fitted to the fitting portions 108a of the mouthpiece type aligner 108 and nipped by the transmitter 113. Consequently, vibration of the vibration generator 111 is transmitted to the contact portions 112 via the transmitter 113, and further transmitted to the teeth 103a to be aligned from the contact portions 112 via the mouthpiece type aligner 108.

As shown in Fig. 10A, a power (AC or DC) supply 116 and a controller 117 for driving the vibration generator 111 are installed outside an oral cavity, and connected to the vibration generator 111 by wiring 118.

As shown in Fig. 10C, the transmitter 113 (and resin block 115 if necessary) may be covered with resin 112' identical to the resin of the contact portions 112. According to this, the transmitter 113 does not directly come into contact with the inside of the oral cavity. Therefore, a material that does not necessarily have high biological safety, such as vinyl chloride and ABS resin, may be used as the transmitter 113.

As shown in Fig. 11B, the power (DC button battery, etc) supply 116 and the controller 117 for driving the vibration generator 111 may be airtightly molded and incorporated in the resin block 115 together with the vibration generator 111. The reference numeral 121 of Fig. 11B denotes a flexible substrate.

Each of the vibrating dental devices 110A shown in Figs. 10A to 10D is configured as one unit which is sized to enable detachable attachment on the mouthpiece type aligner 108 around the teeth 103a to be aligned (specifically, the widths W1 and W2 in Fig. 11A). Each of the vibrating dental devices 110A includes the vibration generator 111, the transmitter 113 and the contact portions 112.

With regard to this vibrating dental device 110A, the paired contact portions 112 nip the mouthpiece type aligner 108 corresponding to the front surfaces 103p and the rear surfaces 103q of the teeth 103a to be aligned or the teeth 103a therearound and come into contact with the mouthpiece type aligner 108.

Consequently, it is possible to effectively vibrate the teeth 103a via the mouthpiece type aligner 108, which is easily detached when one brushes teeth or has meal. Therefore, the vibrating dental device 110A is easily mounted or detached.

The vibrating dental device 110A has a mounting structure which does not cover the entire dentition 103, but is mounted on the mouthpiece type aligner 108 around the teeth 103a to be aligned in the dentition 103. Therefore, the vibrating dental device 110A is miniaturized. Versatility is remarkably improved as well.

The protrusive contact portions 112 are fitted to the recessed fitting portions 108a of the mouthpiece type aligner 108, so that the contact portions 112 may reliably come into contact with a desired location of the mouthpiece type aligner 108. Consequently, it is possible to effectively vibrate the teeth 103a to be aligned. It is possible to easily perform mounting operation on the mouthpiece type aligner 108 and detaching operation from the mouthpiece type aligner 108.

The transmitter 113 includes an elastic member 127a, which may be manually opened against an elastic force of the transmitter 113. Therefore, it is possible to easily perform mounting operation on the mouthpiece type aligner 108 and detaching operation from the mouthpiece type aligner 108. If the transmitter 113 has a sufficient elastic force, and when the mouthpiece type aligner 108 is detached, for example, after meal or tooth brushing, the contact portions 112 of the vibrating dental device 110A may directly nip and come into contact with the teeth 103a around the teeth 103a to be aligned.

The vibration generator 111 may vibrate the teeth 103a in a direction in which the occlusion surface 103r extends, so that vibration transmission efficiency becomes excellent.

The power supply 116 and the controller 117 are installed outside an oral cavity, so that the vibrating dental device 110A may be miniaturized. The power supply 116 and the controller 117 are easily placed inside the oral cavity.

As a modification, as shown in Fig. 11B, the power supply 116 and the controller 117 may be incorporated (airtightly molded) in the resin block 115 of the vibrating dental device 110A, which results in excellent portability.

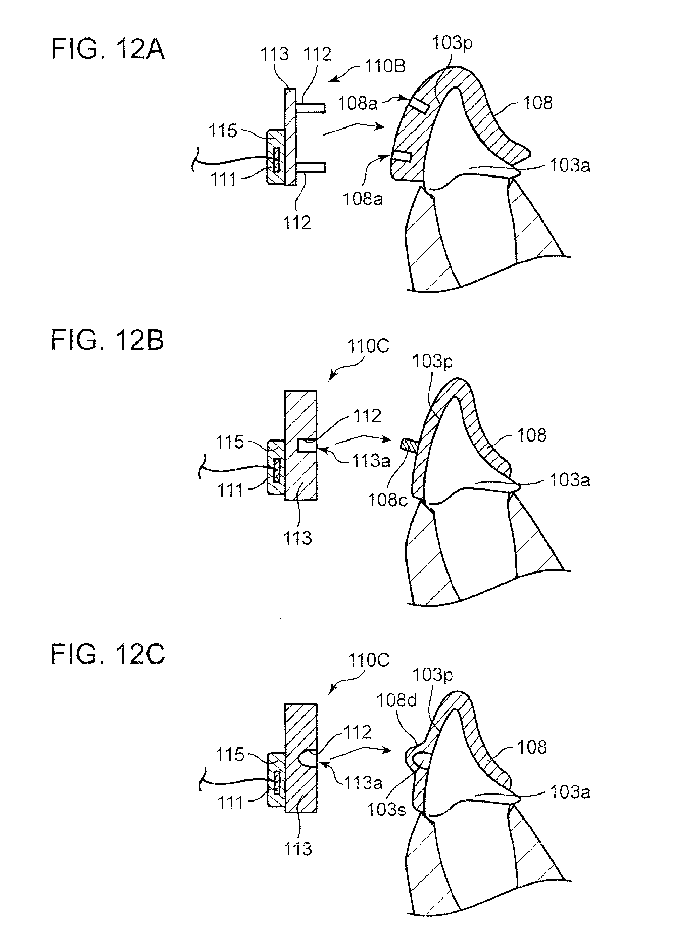

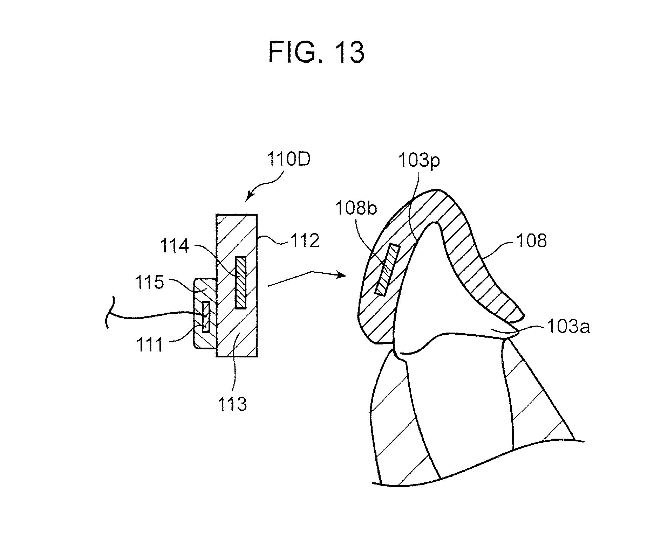

Although the vibrating dental device 110A shown in Fig. 10 is configured so that the contact portions 112 are coupled to the both sides of the mouthpiece type aligner 108 (the front surfaces 3p and the rear surfaces 3q of the teeth 103a), the present invention is not limited to this. As shown in Figs. 12A to 12C and Fig. 13, each of the vibrating dental devices 110B, 110C, 110D may have a structure in which contact portions 112 come into contact with only one side of the mouthpiece type aligner 108 (the front surfaces 103p or the rear surfaces 103q of the teeth 103a).

With regard to the vibrating dental device 110B shown in Fig. 12A, recessed fitting portions 108a are formed on one side of a mouthpiece type aligner 108 (the front surfaces 3p of teeth 103a in this example). For example, these fitting portions 108a are formed by machining or molding from the outside of the molded mouthpiece type aligner 108. Specifically, recessed fitting portions 108a are molded by cutting or formed by, for example, heating or pressure-molding while pressing a jig to match a recessed shape of the fitting portions 108a.

The vibrating dental device 110B shown in Fig. 12A includes a vibration generator 111, which is a vibration source, a plurality of (two in Fig. 12A) contact portions 112 which come into contact with the mouthpiece type aligner 108, and a transmitter 113 which transmits vibration from the vibration generator 111 to the contact portions 112.

The vibration generator 111 is air tightly molded (housed) in a resin block 115. The resin block 115 is mounted on a surface of the transmitter 113 on a side opposite to the mouthpiece type aligner 108.

The contact portions 112 are mounted on a surface of the transmitter 113, the surface facing the mouthpiece type aligner 108. The contact portions 112 have protrusive shapes complementary to recessed fitting portions 108a. The contact portions 112 are fitted to the recessed fitting portions 108a and detachably attached to the mouthpiece type aligner 108.

These contact portions 112 desirably have the same outer shapes as the recessed fitting portions 108a. Thus, the vibrating dental device 110B may be reliably fixed to the mouthpiece type aligner 108. Consequently, vibration generated by the vibration generator 111 may be effectively applied to a dentition 103.

The contact portions 112 have outer shapes slightly larger than recesses of the fitting portions 108a. The contact portions 112 are fixed to the fitting portions 108a by press fitting.

Although the shapes of the recessed fitting portions 108a are not particularly limited, the shape, in which a deep part of each fitting portion 108a is spherically expanded, may more reliably prevent the mouthpiece type aligner 108 from falling during use of the vibrating dental device 110B.

Although the mouthpiece type aligner 108 shown in Fig. 12A has the recessed fitting portions 108a, the present invention is not limited to this. The mouthpiece type aligner 108 has a protrusive fitting portion 108c as shown in Fig. 12B.

For example, the protrusive fitting portion 108c shown in Fig. 12B is formed by welding a component different from the mouthpiece type aligner 108 on the outside of the molded mouthpiece type aligner 108.

The vibrating dental device 110R shown in Fig. 12B has a structure so that the vibrating dental device 110C is mounted on a mouthpiece type aligner 108 having such a protrusive fitting portion 108c. In short, the vibrating dental device 110C has a recessed contact portion 112 which may be fitted to the protrusive fitting portion 108c. For example, the contact portion 112 is consist of an inner surface of a recess 113a formed in a transmitter 113. Consequently, the contact portions 112 and the transmitter 113 may be integrally formed with each other. The recessed contact portion 112 is fitted to the protrusive fitting portion 108c and detachably attached to the mouthpiece type aligner 108. The recessed contact portion 112 may be formed by a member different from the transmitter 113.

With regard to the vibrating dental device 110C shown in Fig. 12B, the recessed contact portion 112 is fitted (tightly fitted) to the protrusive fitting portion 108c of the mouthpiece type aligner 108. Consequently, it is possible to reliably bring the contact portion 112 into contact with a predetermined location of the mouthpiece type aligner 108. The vibrating dental device 110C may effectively transmit vibration from the vibration generator 111 to the teeth 103a. It is possible to easily perform mounting operation on the mouthpiece type aligner 108 and detaching operation from the mouthpiece type aligner 108.

The protrusive fitting portion of the mouthpiece type aligner 108 may be formed by a method different from a method of forming the fitting portion 108c shown in Fig. 10B. For example, tooth form data in a three-dimensional model of a tooth form to be molded is corrected by providing a projection 103s on a front surface 103p of a target teeth 103a, or alike, as shown in Fig. 10C. A mouthpiece type aligner 108 is produced on the basis of the corrected tooth form data. Consequently, a protrusive fitting portion 108d is formed by a part covering the surface of the projection 103s in the mouthpiece type aligner 108.

The vibrating dental device 110C shown in Fig. 12C has a recessed contact portion 112, which is fitted to the protrusive fitting portion 108d, in order to attach the mouthpiece type aligner 108 which has such a protrusive fitting portion 108d. For example, the contact portion 112 is formed by the inner surface of the recess 113a formed in the transmitter 113, like the contact portion 112 shown in Fig. 12B. Similarly to the above, the recessed contact portion 112 may be formed by a member different from the transmitter 113.

In the vibrating dental device 110C shown in Fig. 12C, the recessed contact portion 112 is fitted (tightly fitted) to the protrusive fitting portion 108d of the mouthpiece type aligner 108 as well. Therefore, it is possible to reliably bring the contact portion 112 into contact with a predetermined location of the mouthpiece type aligner 108. Consequently, it is possible to effectively transmit vibration of the vibration generator 111 to the teeth 103a. It is possible to easily perform mounting operation on the mouthpiece type aligner 108 and detaching operation from the mouthpiece type aligner 108.

Although each of the vibrating dental devices 110B, 11C shown in Figs. 12A to 12C includes a protrusive or recessed contact portion and a structure in which the contact portion is fitted to the recessed or protrusive fitting portion provided in the mouthpiece type aligner 108, the present invention is not limited to this. The contact portion of each vibrating dental device may be detachably attached to the mouthpiece type aligner 108 with another means.

For example, the vibrating dental device 110D shown in Fig. 13 includes a magnet 114. The vibrating dental device 110D is detachably attached to a mouthpiece type aligner 108 by using a force attracting a magnet 108b provided in the mouthpiece type aligner 108.

Specifically, as shown in Fig. 13, the vibrating dental device 110D includes a vibration generator 111 as a vibration source, a contact portion 112, which comes into contact with the surface of the mouthpiece type aligner 108, and a transmitter 113, which transmits vibration from the vibration generator 111 to the contact portion 112.

The transmitter 113 is made of synthetic resin. The magnet (permanent magnet) 114 is airtightly molded in this transmitter 113. In Fig. 13, the contact portion 112 is formed by a surface of the transmitter 113 which faces the mouthpiece type aligner 108.

The contact portion 112 may be formed by a member different from the transmitter 113. In this case, the magnet 114 may be suitably arranged in a position closer to the magnet 108b on the side of the mouthpiece type aligner 108 than the transmitter 113 when the magnet 114 is molded inside the contact portion 112.

The magnet (permanent magnet) 108b configured to attract and hold the magnet 114 inside the transmitter 113 is insert-molded on the front surface of the mouthpiece type aligner 108. The magnetic orientations of the magnets 114, 108b are set to a direction in which the magnets 114, 108b attract each other. One of the magnets 114, 108b may be a permanent magnet whereas the other may be a magnetic plate (iron plate, etc.).

If fingers are separated when the contact portion 112 is situated on the front side of the magnet 108b of the mouthpiece type aligner 108 in order to mount the vibrating dental device 110D, the magnet 114 of the vibrating dental device 110D is attracted by a magnetic force acting between the magnet 108b of the mouthpiece type aligner 108 and the magnet 114. Accordingly, the contact portions 112 of the vibrating dental device 110D are detachably attached to the front surface of the mouthpiece type aligner 108. The vibrating dental device 110D is mounted on the mouthpiece type aligner 108. When the contact portions 112 is attached to the mouthpiece type aligner 108, the contact portions 112 is fixed to the mouthpiece type aligner 108 so as not to be detached under vibration. If the vibration generator 111 vibrates when the vibrating dental device 110D is mounted, the vibration of the vibration generator 111 is transmitted to the mouthpiece type aligner 108 via the transmitter 113 and the contact portions 112, and further transmitted to the teeth 103a to be aligned via the mouthpiece type aligner 108.

When the vibrating dental device 110D is held between fingers and pulled away from the front surface of the mouthpiece type aligner 108 to detach the vibrating dental device 110D, the vibrating dental device 110D may be detached from the front surface of the mouthpiece type aligner 108 against the magnetic force acting between the magnets 114, 108b.

With regard to the vibrating dental device 110D shown in Fig. 13, the contact portion 112 of the vibrating dental device 110D may be attracted and attached to the surface of the mouthpiece type aligner 108 with the magnetic force among the magnet 114 of the vibrating dental device 110D, the mouthpiece type aligner 108 and the magnet 8b. Consequently, it is possible to reliably bring the contact portion 112 into contact with a predetermined location of the mouthpiece type aligner 108. As a result, it is possible to effectively transmit vibration of the vibration generator 111 to the teeth 103a. It is possible to easily perform mounting operation on the mouthpiece type aligner 108 and detaching operation from the mouthpiece type aligner 108. Due to the attraction between the magnets 108b, 114, the vibrator 110D is less likely to be placed in a wrong position.

In the embodiments shown in Figs. 10 to 13, positions, at which means for coupling the contact portions 112 of the vibrating dental device 110A to 10D to the mouthpiece type aligner 108 (e.g. fitting portions 108a in Fig. 10A) is installed, are set to a position of a tooth or near a tooth that has the largest gap (difference) between a current shape of a dentition of a user and the inner surface of the mouthpiece type aligner 108. In short, the position is desirably set to the position of a user's tooth of which actual shape is most greatly different from a shape of the inner surface of the mouthpiece type aligner 108.

If the teeth are aligned by using the mouthpiece type aligner 108, it is difficult to attach a mouthpiece type aligner of which shape is greatly different from a current shape of a dentition. Therefore, one to several tens of medical treatment steps are provided between a target shape of a dentition at the end of the medical treatment and a current shape of a dentition of the user. A mouthpiece type aligner, which has a target inner surface, is attached for each medical step. In short, orthodontic treatment is performed by attaching a mouthpiece type aligner that has an inner surface formed in an intermediated shape between the target and current shapes of the dentition.

The tooth which has the largest gap between the inner surface of the mouthpiece type aligner 108 and the current shape of the dentition is a tooth that has the largest moving distance in the medical treatment. A position where vibration generation means is installed is set to or near the tooth which has the largest gap between the current shape of the dentition of the user and the inner surface of the mouthpiece type aligner 108, so that an orthodontic treatment period may be effectively shortened.

In each of the embodiments shown in Figs. 10 to 13, the vibration generator 111 (including the power supply 116 and the controller 117) which enters the oral cavity is airtightly molded in the resin block 115. The vibration generator 111 (including the power supply 116 and the controller 117) which is an electrical component enters the oral cavity. Therefore, the electrical component is airtightly (or watertightly) incorporated in resin block 115, so that safety may be secured.

The vibrating dental devices 110A to 110D shown in Figs. 10 to 13 may be used to vibrate specific teeth by coming into contact with the mouthpiece type aligner 108 but the present invention is not limited to this. Therefore, these vibrating dental devices 110A to 110D may be used to vibrate specific teeth by coming into contact with the bracket 5 or the wire 6.

As described above, the vibrating dental device according to the embodiments is a vibrating dental device configured to vibrate a specific tooth in a dentition to which an orthodontic appliance is attached. The vibrating dental device includes: a vibration source; a contact portion which comes into contact with the orthodontic appliance to vibrate the specific tooth in the dentition; and a vibration transmitter which transmits the vibration generated by the vibration source to the contact portion, wherein the contact portion is detachably attached to the orthodontic appliance.

The vibrating dental device is created on the basis of the fact that usage of a bracket, a wire or a mouthpiece type aligner as an orthodontic appliance using is major orthodontic treatment. The vibrating dental device is consist of the vibration source, the vibration transmitter, and the contact portion. The contact portion is detachably attached to the orthodontic appliance.

The vibrating dental device is consist of the vibration source, the vibration transmitter and the contact portion. Therefore, the vibrating dental device becomes compact and lightweight. The contact portion is detachably attached to the orthodontic appliance. Therefore, it becomes easy to change a tooth to which vibration is applied. The vibration is applied under a condition in which the contact portion is detachably attached to the orthodontic appliance. Therefore, the vibration applied to the tooth is unchanged. The number of the specific tooth is not limited to one, and may be two or more.

The orthodontic appliance may be a bracket. The contact portion may be attached to the bracket.

According to this, vibration may be applied to the tooth by utilizing an existing bracket as it is.

The orthodontic appliance may be a wire. The contact portion may be attached to the wire.

According to this, vibration may be applied to the tooth by utilizing an existing wire as it is.

The orthodontic appliance may be a mouthpiece type aligner. The contact portion may be attached to the mouthpiece type aligner.

According to this, vibration may be applied to the tooth by utilizing an existing mouthpiece type aligner as it is.

At least one of the vibration source, the vibration transmitter and the contact portion may be separable from the others.

According to this, the vibration transmitter or the contact portion is separable from the vibration source. Therefore, it is possible to easily replace the vibration transmitter or the contact portion as the single-use disposable by manually separating these coupling portions, which results in sanitary use.

At least one of the vibration source, the vibration transmitter and the contact portion is separable from the others under a predetermined external impact force.

The coupling portions are separated when a predetermined impact force [e.g. a load, which is larger than an applied vibrational load and smaller than a strength of adhesive bonding (about 100 N) of the bracket], acts on these coupling portions to cause natural detachment. Accordingly, the orthodontic appliance is prevented from dropping from teeth, which results in safe use.

The contact portion is detachably fitted on and attached to the orthodontic appliance.

According to this, the contact portion may be detachably attached to the orthodontic appliance only by an easy fitting operation onto the orthodontic appliance.

The contact portion may be detachably nipped and attached to the orthodontic appliance.

According to this, the contact portion is nipped by the orthodontic appliance, so that the contact portion may be detachably attached to the orthodontic appliance. The contact portion is attached without looseness.

The contact portion may be filled with first soft filler. The first soft filler may be deformed so as to fit an outer shape of the orthodontic appliance when the first soft filler is pressed against the orthodontic appliance. The first soft filler may be attached to the orthodontic appliance with an adhesive force of the first soft filler.

According to this, the first soft filler of the contact portion may be detachably attached to the orthodontic appliance once one presses the first soft filler against the orthodontic appliance.

The contact portion may be filled with second soft filler. The second soft filler may be deformed so as to fit an outer shape of the orthodontic appliance and engage with the orthodontic appliance when the second soft filler is pressed against the orthodontic appliance. The second soft filler may be hardened by an external stimulus or chemical reaction so that the second soft filler is attached to the orthodontic appliance.

According to this, the second soft filler of the contact portion is pressed against the orthodontic appliance, and is hardened by an external stimulus or chemical reaction, so that the second soft filler may be detachably attached to the orthodontic appliance.

The first soft filler may be peeled from the orthodontic appliance under a predetermined load on the contact portion. Or, the second soft filler may be detached from the orthodontic appliance by breakage of the second soft filler when a predetermined load acts on the contact portion.

According to this, the soft filler or the contact portion is peeled or broken by a predetermined load [e.g. a load, which is larger than an applied vibrational load and smaller than strength of adhesive bonding (about 100 N) of the bracket 5] resultant from detaching the soft filler of the contact portion from the orthodontic appliance. Consequently, it is possible to detach the contact portion from the orthodontic appliance without dropping the orthodontic appliance from the tooth.

A coupler for coupling the contact portion to the mouthpiece type aligner may be installed on or near a tooth which has the largest difference between a current shape of the dentition of a user and an inner surface shape of the mouthpiece type aligner.

According to this, if the teeth are aligned by using the mouthpiece type aligner, a vibration generator may be installed on a tooth which has the largest difference between a current shape of the dentition of the user and the inner surface shape of the mouthpiece type aligner, namely, on a tooth which has the largest moving distance in medical treatment, so that an orthodontic treatment period may be effectively shortened.

### Explanation of Reference Numerals

- 1, 103: dentition
- 1a, 103a: tooth
- 2: orthodontic appliance
- 3, 110A to 110D: vibrating dental device
- 5: bracket
- 5a: depression
- 6: wire
- 10A to 10C: vibration source
- 11A to 11C: vibration transmitter
- 12A to 12J: connector (contact portion)
- 25A: first soft filler
- 25B-1, 25B-2: second soft filler
- 103r: occlusion surface
- 108: mouthpiece type aligner
- 111: vibration generator (vibration source)
- 112: contact portion (contact portion)
- 113: transmitter (vibration transmitter)
- 114: magnet

## Claims

1. A vibrating dental device for vibrating a specific tooth and teeth in a dentition to which an orthodontic appliance is attached, the vibrating dental device comprising:
a vibration source;
a contact portion configured to come into contact with the orthodontic appliance and vibrate the specific tooth in the dentition; and
a vibration transmitter configured to transmit the vibration generated by the vibration source toward the contact portion, wherein
the contact portion is detachably attached to the orthodontic appliance.

2. The vibrating dental device according to claim 1, wherein
the orthodontic appliance includes a bracket, and
the contact portion is attached to the bracket.

3. The vibrating dental device according to claim 1, wherein
the orthodontic appliance includes a wire, and
the contact portion is attached to the wire.

4. The vibrating dental device according to claim 1, wherein
the orthodontic appliance includes a mouthpiece, and
the contact portion is attached to the mouthpiece.

5. The vibrating dental device according to claims 1 to 4, wherein
at least one of the vibration source, the vibration transmitter and the contact portion is separable from others.

6. The vibrating dental device according to claims 1 to 5, wherein
at least one of the vibration source, the vibration transmitter and the contact portion is separable from others under a predetermined external impact force.

7. The vibrating dental device according to claims 1 to 6, wherein
the contact portion is detachably fitted on the orthodontic appliance so that the contact portion is attached to the orthodontic appliance.

8. The vibrating dental device according to claims 1 to 6, wherein
the contact portion is detachably nipped by the orthodontic appliance so that the contact portion is attached to the orthodontic appliance.

9. The vibrating dental device according to claims 1 to 8, wherein
the contact portion is filled with first soft filler, and
the first soft filler is deformed when the first soft filler is pressed against the orthodontic appliance so as to fit an outer shape of the orthodontic appliance, and is attached to the orthodontic appliance with an adhesive force of the first soft filler.

10. The vibrating dental device according to claim 9, wherein
the first soft filler is peeled from the orthodontic appliance under a predetermined load acting on the contact portion.

11. The vibrating dental device according to claims 1 to 8, wherein
the contact portion is filled with second soft filler, and
the second soft filler is deformed when the second soft filler is pressed against the orthodontic appliance so as to fit an outer shape of the orthodontic appliance and engage with the orthodontic appliance, and then the second soft filler is hardened by an external stimulus or chemical reaction so that the second soft filler is attached to the orthodontic appliance.

12. The vibrating dental device according to claim 11, wherein
the second soft filler is detached from the orthodontic appliance by breakage under a predetermined load on the contact portion.

13. The vibrating dental device according to claim 4, wherein
a coupler for coupling the contact portion to the mouthpiece is installed on or near a tooth which has a largest difference between a current shape of the dentition of a user and an inner surface shape of the mouthpiece.
